(19) Europäisches Patentamt
European Patent Office
Office européen des brevets

(11) **EP 4 012 609 B1**

(12) **FASCICULE DE BREVET EUROPEEN**

(45) Date de publication et mention de la délivrance du brevet:
**08.07.2026 Bulletin 2026/28**

(21) Numéro de dépôt: **21212398.8**

(22) Date de dépôt: **03.12.2021**

(51) Classification Internationale des Brevets (IPC):
***G06V 40/13*** *(2022.01)*

(52) Classification Coopérative des Brevets (CPC):
**G06V 40/1382; G06V 40/1306**

(54) **DÉTECTEUR DE DERMATOGLYPHES**

DETEKTOR VON DERMATOGLYPHEN

DERMATOGLYPHIC DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2020 FR 2013217**

(43) Date de publication de la demande:
**15.06.2022 Bulletin 2022/24**

(73) Titulaire: **IDEMIA Public Security France**
**92400 Courbevoie (FR)**

(72) Inventeurs:
- **THIEBOT, Alain**
  **92400 COURBEVOIE (FR)**
- **BEAUDET, Jean**
  **92400 COURBEVOIE (FR)**
- **CRUCHAGA, Michel**
  **92400 COURBEVOIE (FR)**
- **MORICEAU, Aurélie**
  **92400 COURBEVOIE (FR)**
- **SIRETA, Alexis**
  **92400 COURBEVOIE (FR)**

(74) Mandataire: **IPS**
**2, place Samuel de Champlain**
**92400 Courbevoie (FR)**

(56) Documents cités:
**US-A1- 2006 159 314**

- **DUPRE ANTOINE ET AL: "Novel Approach for Analysis and Design of High-Speed Electrical Impedance Tomographic System for Void Fraction Measurements in Fast Two-Phase Flows", IEEE SENSORS JOURNAL, IEEE SERVICE CENTER, NEW YORK, NY, US, vol. 17, no. 14, 15 July 2017 (2017-07-15), pages 4472 - 4482, XP011654475, ISSN: 1530-437X, [retrieved on 20170623], DOI: 10.1109/JSEN.2017.2707665**

EP 4 012 609 B1

## Description

La présente invention concerne le domaine de la reconnaissance biométrique, et plus particulièrement la détection de fraude lors de la reconnaissance à partir d'une représentation des dermatoglyphes. Les dermatoglyphes sont les figures formées par les crêtes papillaires de la peau, communément appelées empreintes digitales dans le cas des doigts.

## ARRIERE PLAN DE L'INVENTION

Il est connu des détecteurs de dermatoglyphes comprenant un circuit de détection de fraude relié à une unité électronique de traitement. Le circuit de détection de fraude comprend des électrodes qui sont reliées par des pistes conductrices à l'unité électronique de traitement et qui sont destinées à être en contact avec la peau d'une partie du corps humain, le plus couramment un doigt, afin de faire passer sous une tension prédéterminée un courant par le doigt entre chaque paire d'électrodes en contact avec celui-ci.

Le circuit de détection est généralement formé par un film électriquement conducteur recouvrant la surface d'un support et présentant un motif géométrique définissant les pistes et les électrodes. Ici mince est à comprendre comme d'épaisseur inférieure à 5 μm et le plus souvent inférieure à 400 nm.

A partir de la mesure de l'intensité circulant dans la partie du doigt s'étendant entre chaque paire d'électrodes, il est possible de déterminer une impédance complexe correspondante et d'appliquer les différentes impédances ainsi déterminées à un modèle d'impédance en vue de discriminer un doigt authentique, réel, d'un doigt contrefait, par exemple en matériau synthétique, reproduisant des dermatoglyphes authentiques.

Il s'avère que la détection des faux doigts présente des résultats trop irréguliers avec les circuits de détection actuels. La publication US 2006/159314 A1 décrit un détecteur d'empreintes digitales.

## OBJET DE L'INVENTION

L'invention a notamment pour but d'améliorer au moins en partie les performances des capteurs biométriques.

## RESUME

L'impédance déterminée dépend en fait de l'impédance du circuit de détection, notamment de la longueur, de la largeur et de l'épaisseur des pistes et électrodes, des nuances de matériau, des traitements thermiques réalisés... Or, les tolérances de fabrication entraînent une relative disparité des propriétés de conduction électrique des circuits de détection entre différents lots de production de sorte que les impédances déterminées varient d'un détecteur à l'autre. En revanche, l'impédance d'accès d'une piste comparée à une autre sur le même circuit de détection ne dépend donc que de sa géométrie (largeur, longueur) car les autres paramètres (épaisseur, nature et homogénéité du matériau conducteur...) sont constants pour un même circuit de détection.

Dans la suite, on appelle résistance de feuille (usuellement désignée par sa traduction en anglais « sheet resistance ») la résistance électrique d'un film mince électriquement conducteur qui est homogène en nature et en épaisseur. La résistance de feuille est reliée à l'épaisseur et à la résistivité par la formule suivante $\rho = R_s.e$, avec $e$ l'épaisseur, $p$ la résistivité et $R_s$ la résistance de feuille. La résistance de feuille s'exprime en Ohm.□ ou Ohm/□ (Ohm carré ou Ohm par carré). La résistance de feuille s'obtient le plus souvent par une mesure directe avec un outillage à quatre pointes ou par mesure sans contact, contrairement à la résistivité. La résistivité est calculée à partir de la résistance de feuille et de l'épaisseur. En effet, pour des oxydes conducteurs comme l'ITO ou l'AZO ou pour des couches métalliques très minces, ou des couches hétérogènes comme des encres conductrices, la résistivité pourra varier fortement en fonction du processus de dépôt et même d'un lot à un autre et être différente de celle du matériau pur. La résistance de feuille est donc constante pour un circuit de détection donné puisque le film conducteur est uniforme et d'épaisseur constance et l'impédance d'une piste peut être calculée en connaissant sa géométrie et cette résistance de feuille qu'on vient mesurer.

Ainsi, on prévoit, un détecteur de dermatoglyphe, comprenant un circuit de détection et une unité électronique de traitement, le circuit de détection comportant un film mince électriquement conducteur dans lequel sont formées des électrodes agencées pour prendre contact avec la peau d'une partie de corps humain et des pistes conductrices reliant les électrodes à l'unité de traitement, l'unité de traitement étant agencée pour déterminer des caractéristiques électriques de la partie de corps s'étendant entre chaque paire d'électrode en contact avec la peau et exécuter un programme informatique de discrimination d'une partie de corps authentique et d'une fausse partie de corps à partir des caractéristiques électriques déterminées. Le circuit de détection comprend au moins deux tronçons de piste de géométries différentes s'étendant chacun entre deux bornes d'étalonnage de manière à avoir un rapport d'impédance différent de un.

La piste d'étalonnage, qui fait partie du circuit de détection, présente les mêmes propriétés de conduction électrique que le reste du circuit de détection. La mesure de l'impédance de cette piste d'étalonnage permet de déterminer la résistance de feuille et de tenir compte des propriétés de conduction électrique des pistes conductrices dans la détermination de l'impédance de la partie de corps. L'invention permet ainsi de réduire la sensibilité des mesures aux écarts entre détecteurs afin d'harmoniser les performances entre détecteurs et aussi d'avoir une mesure identique entre points de mesures différents d'un même détecteur pour rendre l'ensemble plus performant en ayant des mesures plus précises car l'algorithme de traitement devient indépendant de la structure matérielle du détecteur.

L'invention concerne également un procédé d'étalonnage d'un tel détecteur.

D'autres caractéristiques et avantages de l'invention ressortiront à la lecture de la description qui suit de modes de réalisation particuliers et non limitatifs de l'invention.

BREVE DESCRIPTION DES DESSINS

Il sera fait référence aux dessins annexés, parmi lesquels :

[Fig. 1] la figure 1 est une vue schématique en coupe d'un détecteur de dermatoglyphe selon l'invention ;
[Fig. 2] la figure 2 est une vue schématique de dessus d'un circuit de détection selon un premier mode de réalisation de l'invention ;
[Fig. 3] la figure 3 est une vue schématique de dessus d'un circuit de détection selon un deuxième mode de réalisation de l'invention.

DESCRIPTION DETAILLEE DE L'INVENTION

L'invention est décrite en relation avec un détecteur de dermatoglyphe utilisé pour la reconnaissance biométrique à partir d'empreintes digitales.

En référence aux figures, le détecteur selon l'invention comprend un bâti 1, en forme de boîtier, enfermant un capteur biométrique généralement désigné en 10.

Le capteur biométrique 10 comprend une caméra 11 ayant un objectif 12 disposé derrière un élément optique transparent 13 ayant une surface 14 servant de surface d'appui pour un doigt d'un candidat à la reconnaissance biométrique. L'élément optique transparent 13 est ici un prisme mais pourrait être une vitre. La vitre peut être réalisée en tout matériau transparent ou translucide comme du verre, du polycarbonate ou du polyméthacrylate de méthyle. La caméra 11 est reliée à une unité électronique de traitement 15 comprenant un processeur et des mémoires contenant un programme informatique, connu lui-même, ayant des instructions agencées pour mettre en œuvre un procédé de reconnaissance biométrique visant à capturer des images du doigt et en extraire des caractéristiques biométriques qui seront comparées à des caractéristiques biométriques de référence.

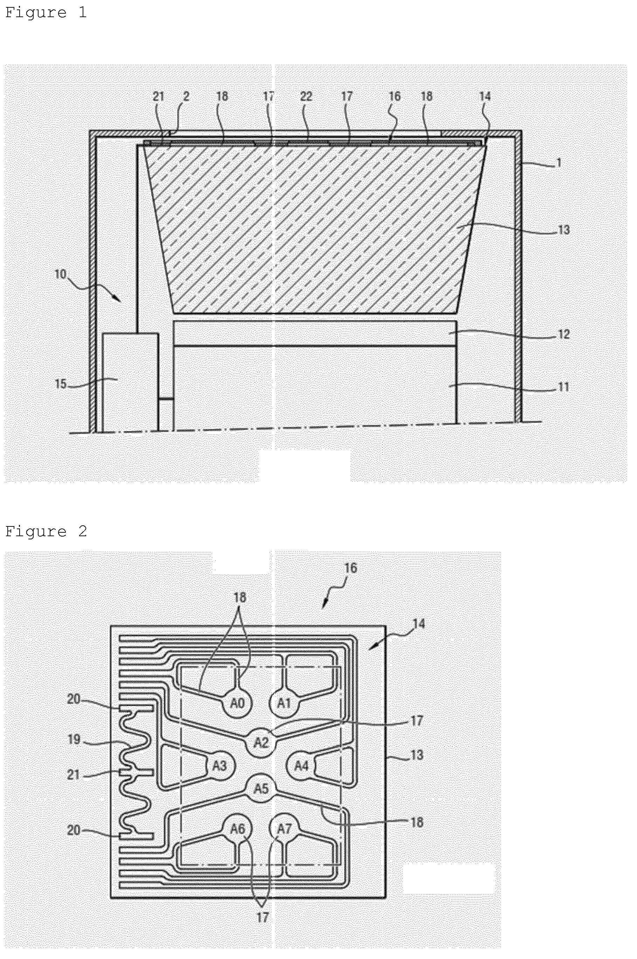

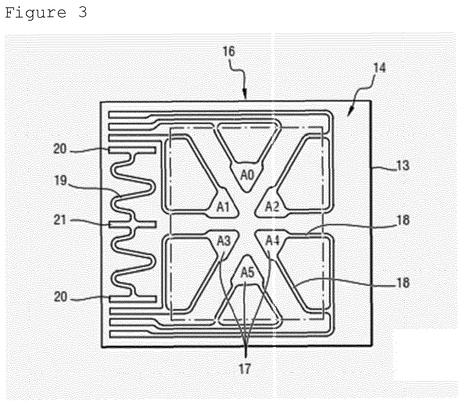

Un circuit électronique de détection de fraude, généralement désigné en 16, s'étend sur la surface 14 de l'élément optique 13. Le circuit de détection 16 est formé par un film mince électriquement conducteur définissant un motif comprenant des électrodes de détection 17 reliées chacune par une ou deux pistes de détection 18 à l'unité électronique de traitement 15. Ces électrodes de détection 17 sont destinées à être en contact avec la peau du doigt dont une image sera capturée par la caméra 11. A la figure 2, les électrodes de détection 17 ont un contour circulaire tandis qu'à la figure 3 les électrodes de détection 17 ont un contour triangulaire. L'unité électronique de traitement 15 est également agencée pour exécuter un programme informatique de discrimination d'un doigt authentique et d'un faux doigt à partir d'au moins une impédance mesurée au moyen du circuit de détection 16. Ce programme est connu en lui-même dans son principe et met en œuvre un modèle d'impédance.

Le film mince formant le circuit de détection 16 comprend également une piste d'étalonnage 19 ayant deux extrémités pourvues chacune d'une borne extrême d'étalonnage 20. La piste d'étalonnage 19 est également pourvue d'une borne intermédiaire d'étalonnage 21 ici située à mi-chemin entre les bornes extrêmes d'étalonnage 20 : les tronçons de piste d'étalonnage 19 reliant la borne intermédiaire d'étalonnage 21 aux bornes extrêmes d'étalonnage 20 ont des longueurs identiques. La piste d'étalonnage 19 a une géométrie connue (longueur et largeur ; l'épaisseur est la même sur tout le circuit de détection de sorte qu'elle peut être négligée). La piste d'étalonnage 19 a ici une forme de ligne ondulée ayant donc une longueur connue, ici identique, de part et d'autre de la borne intermédiaire d'étalonnage 21.

La piste d'étalonnage 19 n'est raccordée à rien d'autre qu'aux bornes 20 et 21. La piste d'étalonnage 19 et les bornes d'étalonnage 20 et 21 sont fabriquées en même temps, avec le même matériau, les mêmes tolérances de fabrication et dans les mêmes conditions de fabrication que les pistes de détection 18 et les électrodes de détection 17. La résistance de feuille est donc identique pour la piste d'étalonnage 19 et les pistes de détection 18 ou les électrodes 17. Les propriétés électriques de la piste d'étalonnage 19 et des bornes d'étalonnage 20 et 21, et notamment leur impédance, sont représentatives des propriétés électriques des pistes de détection 18 et des électrodes de détection 17, et notamment de leur impédance. Autrement dit, la géométrie de la piste d'étalonnage 19 étant connue et la résistance d'une piste étant égale au produit de la longueur de la piste L divisée par la largeur de la piste *l* le tout multiplié par la résistance de feuille

$R_s$ : $R = R_s \cdot \frac{L}{l}$ , la piste d'étalonnage peut être utilisée pour calculer la résistance de feuille et extrapoler l'impédance de n'importe quelle autre piste du circuit de détection (car on suppose que l'épaisseur et la nature du film conducteur sont homogène sur toute la surface du circuit et donc la résistance de feuille est constante pour tout le circuit de détection tandis que les largeurs et longueurs sont données par le dessin du circuit de détection).

Le film mince formant le circuit de détection 16 est ici réalisé par dépôt d'une couche d'oxyde d'indium-étain (ITO) sur la surface 14. Cette couche est suffisamment mince pour être transparente. Plus généralement, le film mince peut comprendre une ou plusieurs couches et peut être réalisé en utilisant des procédés additifs (impression / dépôt à travers un masque) ou soustractifs (dépôt sur toute la surface et gravure ou ablation). Le film mince peut être constitué d'oxyde métallique conducteur (oxyde d'étain et d'indium ou ITO, oxyde de zinc et d'indium ou IZO, oxyde de zinc dopé d'aluminium ou AZO) ou d'encre conductrice transparentes (nano-fils d'argent) ou encore de grilles métalliques présentant des fils de largeur typiquement comprise entre 3 et 5 μm (grilles en titane, aluminium, molybdène, argent, platine...). Plusieurs couches peuvent être empilées avec éventuellement des motifs différents (par exemple une couche d'argent présentant une faible résistivité sous forme de grille et une couche d'ITO présentant de bonnes résistances mécanique et chimique sous forme de pistes larges et d'aplats pour les électrodes).

Les pistes 18 et 19 sont recouvertes par une fine couche 22 de matériau électriquement isolant qui laisse à découvert les électrodes de détection 17 et les bornes d'étalonnage 20 et 21. De cette manière, lorsqu'un doigt est appliqué sur la surface 14, certaines des électrodes de détection 17 sont en contact avec la peau du doigt tandis qu'aucune des pistes de détection 18 n'est en contact avec la peau du doigt.

La surface 14 s'étend en regard d'une ouverture supérieure 2 du bâti 1. Plus précisément, les électrodes de détection 17 et la majeure partie des pistes de détection 18 sont situées dans l'ouverture supérieure 2 tandis que la piste d'étalonnage 19 et les bornes 20, 21 s'étendent sous un rebord du bâti 1 bordant l'ouverture supérieure 2. Plus précisément, l'ensemble des bornes est protégé par le bâti 1.

Le fonctionnement du détecteur selon l'invention va maintenant être décrit.

Pour débuter une opération de reconnaissance, un candidat à la reconnaissance doit appliquer l'un de ses doigts contre la surface 14. Ce faisant, la peau du doigt va être en contact avec certaines des électrodes de détection 17. L'unité électronique de traitement 15 est programmée pour appliquer une tension aux extrémités des pistes, pour mesurer le courant passant entre chacune des paires d'électrodes de détection 17 en contact avec le doigt et les pistes conductrices qui les relient au circuit de détection, et pour en déduire l'impédance de chacune des liaisons ainsi constituées par une paire d'électrodes de détection 17, la portion de doigt entre les deux électrodes de détection 17, les pistes de détection 18 reliées à ces électrodes de détection 17. Les impédances obtenues sont confrontées au modèle d'impédance pour déterminer si le doigt apposé sur la surface 14 est un doigt authentique ou un leurre ou faux doigt.

Si le doigt est considéré comme authentique, l'unité électronique de traitement 15 commande la caméra 11 pour capturer une image à partir de laquelle seront extraites, par un traitement connu en lui-même, des caractéristiques biométriques (également appelées minuties). En variante, la capture biométrique peut être réalisée en parallèle de la détection de fraude.

Si le doigt est considéré comme faux, l'unité électronique de traitement 15 émet une alerte.

Comme indiqué ci-dessus, les liaisons dont on mesure l'impédance sont constituées par une paire d'électrodes de détection 17, la portion de doigt entre les deux électrodes de détection 17, les pistes de détection 18 reliées à ces électrodes de détection 17.

Pour permettre une détection de faux doigt la plus fiable possible, il est donc nécessaire de connaître l'impédance des pistes conductrices 18 et d'en tenir compte dans le modèle d'impédance ou de corriger les impédances mesurées en fonction de l'impédance des pistes conductrices 18 avant de comparer les impédances corrigées au modèle. Il est également nécessaire de connaître les impédances (parallèles) de l'électronique de mesure à laquelle les pistes du circuit de détection 16 sont reliées (ce qui est mesuré en « circuit ouvert »).

Pour ce faire, il est habituellement prévu une opération d'étalonnage effectuée ici par un opérateur, cette opération pouvant être également réalisée par une machine automatique.

L'opérateur effectue les actions suivantes :

- démonter le bâti 1 pour accéder aux bornes 20, 21 ;
- raccorder un circuit de mesure d'impédance aux bornes 20, 21 de la piste d'étalonnage 19 ;
- mesurer une première impédance et une deuxième impédance de la piste d'étalonnage, la première impédance étant mesurée en utilisant une borne d'étalonnage non utilisée pour la mesure de la deuxième impédance ;
- mettre à jour le programme de l'unité électronique de traitement pour prendre en compte les première et deuxième impédances mesurées.

La première impédance Z1 est ici mesurée entre la borne intermédiaire d'étalonnage 21 et l'une des deux bornes extrêmes d'étalonnage 20 et la deuxième impédance Z2 est ici mesurée entre les deux bornes extrêmes d'étalonnage 20.

La première impédance Z1 est la combinaison de :

- l'impédance $Z_{cal}$ du tronçon de la piste d'étalonnage 19 s'étendant entre la borne intermédiaire d'étalonnage 21 et ladite borne extrême d'étalonnage 20 ;
- une impédance parallèle Zparallel qui est une impédance du circuit de mesure lui-même (résistances du circuit imprimé, capacités de découplage, inductions, protections contre les décharges électrostatiques, commutateurs de sélection des pistes actives), il s'agit d'une impédance parallèle à l'impédance qu'on cherche à mesurer, d'où son nom.

La deuxième impédance Z2 est la combinaison de :

- l'impédance $2Z_{cal}$ de la piste d'étalonnage 19 entre les bornes extrêmes d'étalonnage 20 (la borne intermédiaire d'étalonnage 21 étant à mi-chemin entre les deux bornes extrêmes d'étalonnage 20, Z1 comprend $Z_{cal}$ et Z2 comprend $2Z_{cal}$) ;
- une impédance parallèle Zparallel qui est identique à celle présente dans la première impédance Z1.

On peut alors poser :

$$Z_{cal} = \frac{Z_1 Z_2}{2 * (Z_2 - Z_1)}$$

L'impédance parallèle Zparallel peut être déterminée à partir d'une mesure en circuit ouvert.

Connaissant la géométrie des pistes, l'impédance $Z_{cal}$ est utilisée pour calculer la résistance des pistes $R_{piste}$.

Il est alors possible d'extraire, des impédances mesurées Ztot, la résistance de chacune des pistes et l'impédance parallèle afin d'obtenir l'impédance du doigt $Z_{finger}$.

Plus précisément, on obtient :

$$Z_{finger}(f) = \frac{Z_{tot}(f)\left(Z_{parallel}(f) + R_{piste}\right) - R_{piste}}{Z_{parallel}(f) - Z_{tot}(f)}$$

En l'espèce, et afin d'effectuer une discrimination plus précise (certaines impédances étant fortement non linéaires à certaines fréquences), les mesures d'impédance sont effectuées pour différentes fréquences f de tension alternative et le modèle d'impédance prend en compte ces différentes fréquences.

L'opérateur doit donc entrer l'impédance $Z_{cal}$ comme paramètre dans le programme de discrimination exécuté par l'unité électronique de traitement 15 pour permettre à celle-ci de faire les calculs ci-dessus. Il est également possible de n'effectuer des mesures que pour quelques fréquences puis d'extrapoler des impédances pour d'autres fréquence, par exemple sur un modèle électronique théorique en fonction de la fréquence.

L'opération d'étalonnage est par exemple réalisée une première fois en usine, lors de la fabrication du détecteur, puis à l'occasion d'opérations de maintenance. L'opération d'étalonnage peut également être faite périodiquement ou si le détecteur détecte un nombre de faux doigts anormalement élevé. L'unité électronique de traitement 15 peut ainsi être agencée pour émettre une alerte lorsque le taux de détection de faux doigt dépasse un seuil prédéterminé.

Selon un deuxième mode de réalisation du détecteur, les bornes d'étalonnage 20, 21 de la piste d'étalonnage 19 peuvent être raccordées par des conducteurs à l'unité électronique de traitement 15 et l'unité électronique de traitement 15 est agencée pour mesurer la première impédance et la deuxième impédance de la piste d'étalonnage 19, que celle-ci puisse réaliser elle-même, de façon automatique, l'opération d'étalonnage par exemple périodiquement, à chaque démarrage, ou lorsque le taux de détection de faux doigt dépasse un seuil prédéterminé.

Pour mesurer l'impédance parallèle Zparallel, on réalise une mesure en circuit ouvert et il importe qu'aucun élément conducteur extérieur ne soit en contact avec le circuit de détection 16. Dans le cas d'une opération d'étalonnage réalisée automatiquement par l'unité électronique de traitement 15, il est possible d'utiliser la caméra 11 pour capturer une image et vérifier par traitement d'image qu'aucun élément extérieur ne repose sur la surface 14.

On note que dans tous les cas décrits précédemment, il y a au moins trois bornes d'étalonnage, à savoir deux bornes extrêmes 20 et une borne intermédiaire 21, avec : un premier tronçon de piste d'étalonnage s'étendant entre l'une des bornes extrêmes 20 et la borne intermédiaire 21 ; et un deuxième tronçon de piste d'étalonnage incorporant le premier tronçon et s'étendant d'une des bornes extrêmes 20 à l'autre des bornes extrêmes 20.

Bien entendu, l'invention n'est pas limitée aux modes de réalisation décrits mais englobe toute variante entrant dans le champ de l'invention telle que définie par les revendications.

En particulier, la piste d'étalonnage peut avoir une autre forme et notamment une forme rectiligne, en créneaux, en dents de scie... Elle peut aussi s'étendre en partie autour du circuit de détection ou au contraire être disposée à un autre endroit qu'en périphérie.

La piste d'étalonnage peut ne pas être masquée par le bâti. Le nombre et la forme des bornes d'étalonnage peuvent être différents de ceux décrits et représentés. La borne intermédiaire peut se trouver en tout point de la piste d'étalonnage à partir du moment où l'on connait la distance qui la sépare des bornes extrêmes. La piste d'étalonnage peut également comprendre deux tronçons de piste séparés dont on connaît les rapports de section et longueurs pour pouvoir extrapoler leurs rapports de résistances. Par « deux tronçons de piste séparés », on entend qu'aucune des bornes d'étalonnage du premier tronçon n'est commune à l'une quelconque des bornes d'étalonnage du deuxième tronçon : il y a donc quatre bornes d'étalonnage et non trois comme dans les modes de réalisation représentés sur les figures.

Le premier tronçon de piste d'étalonnage peut avoir une surface $\alpha$ fois la surface du deuxième tronçon de piste d'étalonnage. L'impédance Zcal1 du premier tronçon est alors égale à $\alpha$.Zcal2 où Zcal2 est l'impédance du deuxième tronçon. Il en résulte que l'impédance Zcal du tronçon d'étalonnage vaut :

$$Z_{cal} = \frac{(\alpha - 1)Z_1 Z_2}{\alpha * (Z_2 - Z_1)}$$

Le détecteur peut ou pas comprendre un organe de capture biométrique. Cet organe de capture peut être optique, capacitif, thermique ou autre.

Le détecteur peut être utilisable avec toute partie de corps présentant des dermatoglyphes comme la paume de la main.

D'autres matériaux peuvent être utilisés pour réaliser le circuit de détection, par exemple un matériau à base de graphène.

La mesure en circuit ouvert peut être réalisée de différentes manières :

- en faisant une mesure automatique sans raccorder le circuit interne de mesure à aucune des pistes de mesure (on utilise par exemple des commutateurs pilotés par logiciel comme quand on raccorde à une piste ou une autre) ;
- en raccordant le circuit interne de mesure à deux pistes quelconques non fermées mais dont on est certain que rien n'est posé dessus (ce qui est possible en fabrication lors d'une opération supervisée). Cette solution est utilisée seulement si le circuit de mesure n'a pas assez d'entrées libres.

On notera que le détecteur peut refaire les mesures d'impédance parallèle seul, sans risque et sans besoin de contrôler la présence d'un objet posé sur le circuit de détection, sur le site d'utilisation, à chaque démarrage du détecteur ou via une procédure programmée ou provoquée d'auto-recalibration, pour lever des alertes ou corriger un écart important des mesures.

**Revendications**

1. Détecteur de dermatoglyphe, comprenant un circuit de détection (16) et une unité électronique de traitement (15), le circuit de détection comportant un film mince électriquement conducteur dans lequel sont formées des électrodes (17) agencées pour prendre contact avec la peau d'une partie de corps humain et des pistes conductrices (18) reliant les électrodes à l'unité de traitement, l'unité de traitement étant agencée pour déterminer des caractéristiques électriques de la partie de corps s'étendant entre chaque paire d'électrodes en contact avec la peau et exécuter un programme informatique de discrimination d'une partie de corps authentique et d'une fausse partie de corps à partir des caractéristiques électriques déterminées, **caractérisé en ce que** le circuit de détection comprend une piste d'étalonnage (19) pourvue d'au moins deux tronçons de piste de géométries différentes reliant l'une à l'autre deux bornes extrêmes (20) d'étalonnage et une borne intermédiaire d'étalonnage (21) de manière à avoir un rapport d'impédance différent de un, et la piste d'étalonnage (19) présente les mêmes propriétés de conduction électrique que le reste du circuit de détection (16).

2. Détecteur selon l'une quelconque des revendications précédentes, dans lequel la borne intermédiaire (21) d'étalonnage est disposée à mi-chemin entre les bornes extrêmes d'étalonnage (20).

3. Détecteur selon la revendication 1, dans lequel les tronçons de piste sont séparés l'un de l'autre.

4. Détecteur selon l'une quelconque des revendications précédentes, dans lequel l'unité électronique de traitement (15) est reliée aux bornes d'étalonnage (20, 21) et agencée pour déterminer une grandeur représentative d'une impédance des tronçons de piste et de tenir compte de cette grandeur lors de l'exécution du programme informatique.

5. Détecteur selon l'une quelconque des revendications précédentes, dans lequel les tronçons de piste s'étendent en périphérie du circuit de détection (16).

6. Détecteur selon la revendication 3, comprenant un bâti (1) comportant une fenêtre (2) à l'aplomb du circuit de détection (16), le bâti (1) comportant une portion couvrant les tronçons de piste.

7. Détecteur selon l'une quelconque des revendications précédentes, dans lequel au moins l'un des tronçons de piste a une forme ondulée.

8. Procédé d'étalonnage d'un détecteur selon l'une quelconque des revendications précédentes, comprenant les étapes de :

   - raccorder un circuit de mesure d'impédance aux bornes des tronçons de piste ;
   - mesurer l'impédance de chaque tronçon de piste ;
   - mettre à jour le programme de l'unité électronique de traitement (15) pour prendre en compte les impédances mesurées.

9. Procédé selon la revendication 8, la mise à jour est réalisée en calculant une résistance de feuille à partir des impédances des tronçons de piste et de la géométrie de ceux-ci et en calculant la résistance de chacune des pistes du circuit de détection (16) à partir de la géométrie des pistes et de la résistance de feuille.

10. Procédé selon la revendication 9, dans lequel les tronçons de piste présentent relativement l'un à l'autre par leur géométrie un rapport $\alpha$ d'impédance, l'impédance Zcal vaut :

$$Z_{cal} = \frac{(\alpha - 1)Z_1 Z_2}{\alpha * (Z_2 - Z_1)}$$

dans laquelle Z1 et Z2 représentent les impédances respectives des tronçons de piste.

11. Procédé selon la revendication 8 ou 9, comprenant une mesure d'impédance en circuit ouvert pour mesurer une impédance parallèle d'une électronique de mesure à laquelle les pistes du circuit de détection (16) sont reliées.

12. Procédé selon l'une quelconque des revendications 8 à 11, dans lequel les mesures d'impédance des tronçons de piste sont effectuées pour différentes fréquences (f) de tension alternative.

13. Procédé selon les revendications 9 à 12, dans lequel l'impédance d'un doigt $Z_{finger}(f)$ à une fréquence donnée f est égale à :

$$Z_{finger}(f) = \frac{Z_{tot}(f)\big(Z_{parallel}(f) + R_{piste}\big) - R_{piste}}{Z_{parallel}(f) - Z_{tot}(f)}$$

dans laquelle
$Z_{tot}(f)$ est l'impédance totale mesurée à la fréquence donnée f ; $Z_{parallel}(f)$ est l'impédance parallèle mesurée à la fréquence donnée f ; $R_{piste}$ est la résistance des pistes du circuit de détection (16).

**Patentansprüche**

1. Dermatoglyphen-Detektor, umfassend eine Detektionsschaltung (16) und eine elektronische Verarbeitungseinheit (15), wobei die Detektionsschaltung einen elektrisch leitenden Dünnfilm umfasst, in dem Elektroden (17) ausgebildet sind, die dazu angeordnet sind, mit der Haut eines Teils eines menschlichen Körpers in Kontakt zu treten, sowie Leiterbahnen (18), die die Elektroden mit der Verarbeitungseinheit verbinden, wobei die Verarbeitungseinheit dazu angeordnet ist, elektrische Eigenschaften des Körperteils zu bestimmen, das sich zwischen jedem Elektrodenpaar erstreckt, das mit der Haut in Kontakt steht, und ein Computerprogramm zur Unterscheidung eines echten Körperteils von einem falschen Körperteil anhand der bestimmten elektrischen Eigenschaften auszuführen, **dadurch gekennzeichnet, dass** die Detektionsschaltung eine Kalibrierungsbahn (19) aufweist, die mit mindestens zwei Bahnabschnitten unterschiedlicher Geometrie versehen ist, welche zwei äußere Kalibrierungsanschlüsse (20) miteinander und mit einem mittleren Kalibrierungsanschluss (21) verbinden, sodass ein Impedanzverhältnis ungleich eins vorliegt, und wobei die Kalibrierungsbahn (19) dieselben elektrischen Leitungseigenschaften aufweist wie der Rest der Detektionsschaltung (16).

2. Detektor nach einem der vorhergehenden Ansprüche, bei dem der mittlere Kalibrierungsanschluss (21) auf halber Strecke zwischen den äußeren Kalibrierungsanschlüssen (20) angeordnet ist.

3. Detektor nach Anspruch 1, bei dem die Bahnabschnitte voneinander getrennt sind.

4. Detektor nach einem der vorhergehenden Ansprüche, bei dem die elektronische Verarbeitungseinheit (15) mit den Kalibrierungsanschlüssen (20, 21) verbunden und dazu angeordnet ist, eine für eine Impedanz der Bahnabschnitte repräsentative Größe zu bestimmen und diese Größe bei der Ausführung des Computerprogramms zu berücksichtigen.

5. Detektor nach einem der vorhergehenden Ansprüche, bei dem sich die Bahnabschnitte am Rand der Detektionsschaltung (16) erstrecken.

6. Detektor nach Anspruch 3, umfassend ein Gestell (1) mit einem Fenster (2) senkrecht über der Detektionsschaltung (16), wobei das Gestell (1) einen Abschnitt aufweist, der die Bahnabschnitte abdeckt.

7. Detektor nach einem der vorhergehenden Ansprüche, bei dem mindestens einer der Bahnabschnitte eine wellenförmige Form aufweist.

8. Verfahren zur Kalibrierung eines Detektors nach einem der vorhergehenden Ansprüche, umfassend die Schritte:

   - Anschließen einer Impedanzmessschaltung an die Anschlüsse der Bahnabschnitte;
   - Messen der Impedanz jedes Bahnabschnitts;
   - Aktualisieren des Programms der elektronischen Verarbeitungseinheit (15), um die gemessenen Impedanzen zu berücksichtigen.

9. Verfahren nach Anspruch 8, wobei die Aktualisierung durch Berechnung eines Schichtwiderstands aus den Impedanzen der Bahnabschnitte und deren Geometrie sowie durch Berechnung des Widerstands jeder der Bahnen der Detektionsschaltung (16) aus der Geometrie der Bahnen und dem Schichtwiderstand durchgeführt wird.

10. Verfahren nach Anspruch 9, bei dem die Bahnabschnitte aufgrund ihrer Geometrie ein Impedanzverhältnis $\alpha$ zueinander aufweisen, wobei die Impedanz Zcal gleich ist:

$$Z_{cal} = \frac{(\alpha - 1)Z_1 Z_2}{\alpha * (Z_2 - Z_1)}$$

wobei Z1 und Z2 die jeweiligen Impedanzen der Bahnabschnitte darstellen.

11. Verfahren nach Anspruch 8 oder 9, umfassend eine Impedanzmessung im Leerlauf zur Messung einer Parallelimpedanz einer Messelektronik, mit der die Bahnen der Detektionsschaltung (16) verbunden sind.

12. Verfahren nach einem der Ansprüche 8 bis 11, bei dem die Impedanzmessungen der Bahnabschnitte bei verschiedenen Frequenzen (f) einer Wechselspannung durchgeführt werden.

13. Verfahren nach den Ansprühen 9 bis 12, bei dem die Impedanz eines Fingers Zfinger(f) bei einer gegebenen Frequenz f gleich ist:

$$Z_{finger}(f) = \frac{Z_{tot}(f)(Z_{parallel}(f) + R_{piste}) - R_{piste}}{Z_{parallel}(f) - Z_{tot}(f)}$$

Ztot(f) ist die bei der gegebenen Frequenz f gemessene Gesamtimpedanz;
Zparallel(f) ist die bei der gegebenen Frequenz f gemessene Parallelimpedanz;
Rpiste ist der Widerstand der Bahnen der Detektionsschaltung (16).

## Claims

1. Dermatoglyph detector, comprising a detection circuit (16) and an electronic processing unit (15), the detection circuit comprising an electrically conductive thin film in which are formed electrodes (17) arranged to come into contact with the skin of a part of a human body and conductive tracks (18) connecting the electrodes to the processing unit, the processing unit being arranged to determine electrical characteristics of the body part extending between each pair of electrodes in contact with the skin and to execute a computer program for discriminating a genuine body part from a fake body part on the basis of the determined electrical characteristics, **characterised in that** the detection circuit comprises a calibration track (19) provided with at least two track sections of different geometries connecting two extreme calibration terminals (20) to each other and to an intermediate calibration terminal (21) so as to have an impedance ratio different from one, and the calibration track (19) has the same electrical conduction properties as the rest of the detection circuit (16).

2. Detector according to any one of the preceding claims, wherein the intermediate calibration terminal (21) is arranged midway between the extreme calibration terminals (20).

3. Detector according to claim 1, wherein the track sections are separated from each other.

4. Detector according to any one of the preceding claims, wherein the electronic processing unit (15) is connected to the calibration terminals (20, 21) and arranged to determine a quantity representative of an impedance of the track sections and to take this quantity into account during execution of the computer program.

5. Detector according to any one of the preceding claims, wherein the track sections extend at the periphery of the detection circuit (16).

6. Detector according to claim 3, comprising a frame (1) having a window (2) directly above the detection circuit (16), the frame (1) having a portion covering the track sections.

7. Detector according to any one of the preceding claims, wherein at least one of the track sections has a wavy shape.

8. Method for calibrating a detector according to any one of the preceding claims, comprising the steps of:

   - connecting an impedance measurement circuit to the terminals of the track sections;
   - measuring the impedance of each track section;
   - updating the program of the electronic processing unit (15) to take the measured impedances into account.

9. Method according to claim 8, the update being performed by calculating a sheet resistance from the impedances of the track sections and their geometry, and by calculating the resistance of each of the tracks of the detection circuit (16) from the geometry of the tracks and the sheet resistance.

10. Method according to claim 9, wherein the track sections have, relative to each other by virtue of their geometry, an impedance ratio $\alpha$, the impedance Zcal being equal to:

$$Z_{cal} = \frac{(\alpha - 1)Z_1 Z_2}{\alpha * (Z_2 - Z_1)}$$

wherein Z1 and Z2 represent the respective impedances of the track sections.

11. Method according to claim 8 or 9, comprising an open-circuit impedance measurement for measuring a parallel impedance of a measurement electronics to which the tracks of the detection circuit (16) are connected.

12. Method according to any one of claims 8 to 11, wherein the impedance measurements of the track sections are carried out at different frequencies (f) of alternating voltage.

13. Method according to claims 9 to 12, wherein the impedance of a finger Zfinger(f) at a given frequency f is equal to:

$$Z_{finger}(f) = \frac{Z_{tot}(f)(Z_{parallel}(f) + R_{piste}) - R_{piste}}{Z_{parallel}(f) - Z_{tot}(f)}$$

Ztot(f) is the total impedance measured at the given frequency f; Zparallel(f) is the parallel impedance measured at the given frequency f; Rpiste is the resistance of the tracks of the detection circuit (16).

Figure 1

Figure 2

Figure 3

## EP 4 012 609 B1

### RÉFÉRENCES CITÉES DANS LA DESCRIPTION

### Documents brevets cités dans la description

- US 2006159314 A1